# EUROPÄISCHE PATENTSCHRIFT

(11) **EP 1 240 438 B1**
(45) Veröffentlichungstag und Bekanntmachung des Hinweises auf die Patenterteilung: **25.05.2005**
(21) Anmeldenummer: 01982154.5
(22) Anmeldetag: 27.09.2001
(51) Int. Cl.: F16C 11/06

(54) **KUGELGELENK**
BALL JOINT
JOINT A ROTULE

(30) Priorität: 19.10.2000 DE 10052122
(43) Veröffentlichungstag der Anmeldung: 18.09.2002
(73) Patentinhaber: ZF Lemförder Metallwaren AG, 49441 Lemförde (DE)
(72) Erfinder: MÖNNINGHOFF, Andreas, 49497 Mettingen (DE); GERCKE, Matthias, 27257 Affinghausen (DE); WELLERDING, Martin, 49461 Damme (DE); RECHTIEN, Martin, 49434 Neuenkirchen-Vörden (DE); ABELS, Olaf, 49191 Belm (DE)
(86) Internationale Anmeldenummer: PCT/DE2001/003706
(87) Internationale Veröffentlichungsnummer: WO 2002/033275

(56) Entgegenhaltungen:
- WO-A-01/40669
- DE-A- 19 938 770
- DE-A- 19 943 194
- US-A- 3 524 664
- US-A- 4 564 307
- US-A- 5 851 082
- US-A- 6 019 541

## Beschreibung

Die Erfindung betrifft ein Kugelgelenk nach dem Oberbegriff des Patentanspruches 1.

Ein derartiges Kugelgelenk, wie es beispielsweise aus der US 6,042,294 oder der US 6,010,272 bekannt ist und das als Radfuhrungsgelenk für Kraftfahrzeuge zum Einsatz kommen kann, besteht aus einem Gehäuse, das einen wenigstens einseitig offenen Hohlraum aufweist. In diesen Hohlraum wird eine Lagerschale mit einer darin gelagerten Gelenkkugel eingesetzt.

Die Lagerschale ist bei Lösungen nach den zitierten Dokumenten zusammen mit der von ihr aufgenommenen Gelenkkugel in dem Hohlraum entlang einer mit der Symmetrieachse der Lagerschale zusammenfallenden Achse verschiebbar, wobei in dem Hohlraum des Gehäuses ein erster Bund und ein zweiter Bund Endanschläge bilden, zwischen denen somit ein begrenzter Freiweg der verschiebbaren Lagerschale definiert ist, sodass die Baueinheit bestehend aus Lagerschale und Gelenkkugel zwischen dem ersten Bund und dem zweiten Bund des Gehäuses gleitend hin- und herbewegbar ist. Gleitlager weisen zwischen den aneinander gleitenden Lagerflächen ein Spiel auf, das als "Lagerluft" bezeichnet wird. Diese Lagerluft führt dazu, dass die Kombination einer Gleitlagerung mit einem Kugelgelenk bislang nur unzufriedenstellend gelöst werden konnte. Auch die Kugelgelenkausführungen nach der US 6,042,294 oder der US 6,010,272 bieten hierfür keine zufriedenstellende Lösung.

Ein weiteres Problem besteht darin, dass insbesondere die Kugelgelenke im Radträger eines Kraftfahrzeuges hohen thermischen Belastungen ausgesetzt sind. Diese rühren von benachbarten Bauteilen, wie den Bremsen, her und beeinflussen das Lagerungsverhalten nachhaltig. Dabei sind Wärmeschutzschilde zwar teilweise sinnvoll, jedoch können diese die Kugelgelenke nicht dauerhaft schützen, sodass ein Bedarf an Gelenken besteht, die ein annähernd konstantes Lagerungsverhalten trotz extremer Temperaturschwankungen aufweisen. Diese Schwierigkeiten bei bekannten Kugelgelenken nehmen mit abnehmenden Außentemperaturen zu und werden durch die Temperaturbeeinflussung der das Kugelgelenk aufnehmenden Bauteile im Kraftfahrzeug zusätzlich verstärkt.

Die technische Problemstellung der Erfindung kann darin gesehen werden, ein Kugelgelenk zu schaffen, das Form-, Lage- und Einbautoleranzen sowie Verformungen der Kugelgelenkbauteile durch thermische Belastungen oder durch äußere Krafteinwirkungen wirksam ausgleicht.

Gelöst wird diese Problemstellung mit den kennzeichnenden Merkmalen des Patentanspruches 1. Ausgestaltungen der Erfindung sind Gegenstand der Unteransprüche.

Die vorliegende Erfindung geht einen völlig neuen Weg. Hierbei ist es erwünscht und wird durch die erfindungsgemäße Ausführung auch erreicht, dass sich die Lagerschale zusammen mit der von ihr gelagerten Gelenkkugel innerhalb des Gehäuses bewegen kann. Demgemäß besteht zwischen der Außenoberfläche der Lagerschale und der Innenoberfläche des Hohlraumes des Gehäuses, in dem die Lagerschale aufgenommen ist, eine Gleitverbindung. Diese an sich bekannte Lösung wird erfindungsgemäß dadurch verbessert, dass die Lagerschale unter sanfter radialer Vorspannung in dem Hohlraum des Gehäuses aufgenommen ist, sie sich also in entsprechender Weise an den Wandungen des Hohlraumes abstützt. Hierzu ist zwischen der Außenoberfläche der Lagerschale und der Innenoberfläche des Hohlraumes wenigstens ein radial wirksames Ausgleichselement angeordnet.

Die Lagerschale ist zusammen mit der von ihr aufgenommenen Gelenkkugel in dem Hohlraum entlang einer Achse verschiebbar, wobei die Lage der Achse nicht zwingend mit der Symmetrieachse der Lagerschale zusammenfallen muß. Vielmehr liegt auch eine Neigung der Achse innerhalb des Gelenkgehäuses im Bereich der Erfindung.

Mit einer derartigen Kugelgelenkausführung sind sowohl Form- als auch Lagetoleranzen des Kugelgelenkes sowie Verformungen der Kugelgelenkbauteile durch thermische Belastungen oder durch äußere Krafteinwirkungen wirksam ausgleichbar. Zudem wurde ein Kugelgelenk geschaffen, das in radialer Richtung spielfrei ist.

Thermische Spannungen und in geringem Umfang sogar Biegungen, wie beispielsweise die Durchbiegungen des Radträgers infolge auftretender Seitenkräfte auf den Radträger, können kompensiert werden. Das als Loslager ausgeführte Kugelgelenk überträgt Radialkräfte und verbessert damit die Seitenführung des Kraftfahrzeugrades, was insbesondere beim Anfahren und Bremsen von erheblichem Vorteil ist.

Gemäß einer Ausgestaltung der Erfindung läßt sich die zuvor genannte radiale Vorspannung erzeugen, indem in die Außenoberfläche der Lagerschale mindestens eine Nut eingelassen und in jede Nut ein Ausgleichselement eingesetzt wird.

Um die radiale Vorspannung möglichst gleichmäßig zu erzeugen, ist es sinnvoll, wenigstens zwei parallele, zueinander beabstandete Nuten mit darin eingesetzten Ausgleichselementen vorzusehen.

Die Außenabmessungen des Ausgleichselementes beziehungsweise der Ausgleichselemente sollten dabei geringfügig größer als die Innenabmessung des Hohlraumes des Gehäuses sein. So ist eine leicht ballige Außenabmessung eines jeden Ausgleichselementes von besonderem Vorteil, wobei zumindest eine begrenzte Elastizität des Ausgleichselementes gegeben sein sollte.

Das Gehäuse eines erfindungsgemäßen Kugelgelenkes ist einseitig oder beidseitig offen ausführbar. Bei einem einseitig offenen Gehäuse ist es möglich, den Gehäuseboden als zweiten Bund zu nutzen.
Weiterhin wird es für sinnvoll erachtet, an einem beidseitig offenen Gehäuse einen ersten Bund, der beispielsweise aus einem gelenkeinwärts gerichteten Teil des Gehäuserandes besteht und einen zweiten Bund vorzusehen, der als radialer Flanschbereich eines Verschlusselementes ausgebildet sein kann.

Als Verschlusselement ist dabei jedes Bauteil verwendbar, das in der Lage ist, die empfindlichen Lagerinnenteile vor Verunreinigungen oder vor dem Eindringen von Feuchtigkeit zu schützen. Bekannt sind beispielsweise Dichtungsbälge aus Gummiwerkstoffen.

Entsprechend einem weitergehenden Vorschlag kann das in eine Aufnahme des Gehäuses eingesetzte Verschlusselement durch eine beim Verschließen des Kugelgelenkes erfolgende Umformung eines Materialwulstes des Gehäuserandes an dem Gehäuse festgesetzt werden.

Das Verschlusselement ist sowohl einteilig ausführbar, es kann jedoch ebenso mehrteilig, beispielsweise aus einem Verschlussring und einem dichtend mit diesem verbundenen Deckel bestehen. Dabei empfiehlt sich zur Verbesserung der Abdichtung zwischen Verschlussring und Deckel wenigstens ein Dichtelement einzusetzen. Nur beispielhaft für ein solches Dichtelement sei hier ein Rundring aus Gummi erwähnt.

Weitere Ausgestaltungen der Erfindung können ferner darin bestehen, die Gelenkkugel lösbar mit einem Zapfen zu verbinden. Somit ergibt sich die Möglichkeit, zwei separat herstellbare Bauteile zu einem Kugelzapfen zu verbinden, was insbesondere bei erforderlichem Oberflächenschutz an nur einem dieser Bauteile nützlich ist und zudem die Möglichkeit eines Baukastensystems bietet, das eine bedarfsgerechte Kugelzapfenfertigung aus standardisierten Einzelteilen gestattet.

Der Zapfen kann darüber hinaus auch als Bestandteil eines Radträgers eines Kraftfahrzeuges ausgeführt werden. Durch diese Maßnahme, das heisst, die unmittelbare Anbindung der Gelenkkugel an einen mit dem Radträger einstückig ausgeführten Zapfen, können zusätzliche Anbauteile und damit Montagevorgänge gespart werden.

Ein spezielles Ausführungsbeispiel der Erfindung wird nachstehend unter Bezugnahme auf die Zeichnung näher erläutert.

Es zeigt:

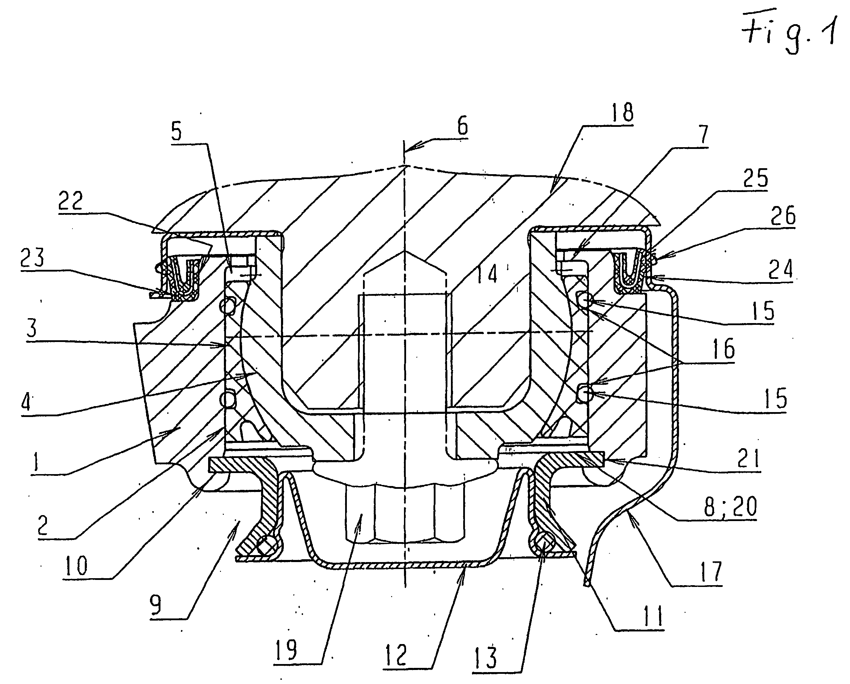

- Figur 1:: ausschnittsweise ein erfindungsgemäßes Kugelgelenk im Querschnitt.

In der Figur ist auf einen Zapfen 14 eines Radträgers 18 eine Gelenkkugel 4 aufgesetzt. Die Gelenkkugel 4 ist durch eine Verschraubung 19 lösbar mit dem Zapfen 14 verbunden.

Mit ihrer kugeligen Geometrie ist die Gelenkkugel 4 in einer Lagerschale 3 aufgenommen, die eine zu der Gelenkkugel 4 komplementäre Innengeometrie aufweist. In dem gezeigten Beispiel ist in einem beidseitig offenen Gehäuse 1 des Kugelgelenkes ein zylindrischer Hohlraum 2 vorhanden, in den die Lagerschale 3 gleitbeweglich eingesetzt ist. In die Außenoberfläche der Lagerschale sind in Richtung der Achse 6 betrachtet axial beabstandet zwei umlaufende Nuten 16 eingebracht. Die Nuten 16 nehmen jeweils ein Ausgleichselement 15 auf, das, bezogen auf die Achse 6, eine radiale Vorspannung zwischen Lagerschale 3 und Innenoberfläche des Hohlraumes 2 erzeugt. Damit wird ein Spielausgleich erreicht und ferner verhindert, dass die Lagerschale eine Drehbewegung um die Achse 6 vollzieht. Die Radialsteifigkeit, das heißt die Dämfungseigenschaften dieses Kugelgelenkes sind in radialer Richtung sehr genau einstellbar. Aus der Figur ist auch entnehmbar, dass der Außenumfang des Ausgleichselementes 15 hier ballig ausgeführt wurde, weshalb ein ringförmiger Querschnitt gewählt wurde. Dadurch wird einerseits die radiale Spielfreiheit und andererseits eine leichtgängige axiale Beweglichkeit der Baueinheit, bestehend aus Gelenkkugel 4 und Lagerschale 3, innerhalb des Hohlraumes 2 gewährleistet.

Das Gehäuse 1 weist ferner einen ersten Bund 7 sowie auf der gegenüberliegenden Seite einen zweiten Bund 8 auf. Der Abstand zwischen diesen Bunden ist so groß gewählt, dass er größer ist, als die Höhe der Lagerschale 3. Somit verbleibt ein Freiweg 5, der die axiale Beweglichkeit der Baueinheit, bestehend aus Lagerschale 3 und Gelenkkugel 4, ermöglicht.

Im dargestellten Ausführungsbeispiel dient als erster Bund 7 ein gelenkeinwärts gerichteter Teil des Gehäuserandes und als zweiter Bund 8 ein radialer Flanschbereich 20 eines insgesamt mit 9 bezeichneten Verschlusselementes. Das Verschlusselement 9 ist vorliegend aus Montagegründen mehrteilig ausgeführt worden. Es besteht aus einem Verschlussring 11 und einem mit dem Verschlussring 11 einen Pressverband bildenden Deckel 12. Zur besseren Abdichtung wurde zwischen den Deckel 12 und den Verschlussring 11 ein Dichtelement 13 eingefügt.

Der Verschlussring 11 wird während der Montage des Kugelgelenkes zunächst mit einem radial gerichteten Flanschbereich 20 in eine gehäuseinnenseitig angeordnete Aufnahmenut 21 eingelegt. Anschließend erfolgt während des Verschließens des Gehäuses eine Umformung einer Materialwulst 10 des Gehäuserandes, wodurch der Verschlussring 11 festgesetzt wird.

Ein Wärmeschutzschild 17 schützt die Kugelgelenkbauteile in an sich bekannter Weise vor schädlicher Wärmestrahlung benachbarter Bauteile. Dies sind am Radträger 18 die Bremsen des Kraftfahrzeuges.

Zur Optimierung der Abdichtung des Kugelgelenkes gegenüber äußeren Einflüssen ist in einen Ringbereich 22 eine elastische Dichtung 23 eingesetzt, deren äußere elastische Dichtfläche 24 sich gegen das Wärmeschutzschild des Kugelegelnkes abstützt. Die Dichtung 23 ist auf der Zapfenseite, also auf der Seite des ersten Bundes 7 an dem Gelenkgehäuse angebracht, wobei die Anbringung unter Nutzung einer stoffschlüssigen, fonnschlüssigen oder kraftschlüssigen Verbindung erfolgen kann. Zur Verbesserung der Elastizität wurde die Dichtung 23 aus einem Gummiwerkstoff hergestellt, der vorliegend eine Einlage 25 aufweist. Die Dichtung weist ferner einen wulstförmigen Abschnitt 26 auf.

### Bezugszeichenliste:

- 1: Gehäuse
- 2: Hohlraum
- 3: Lagerschale
- 4: Gelenkkugel
- 5: Freiweg
- 6: Achse
- 7: Erster Bund
- 8: Zweiter Bund
- 9: Verschlusselement
- 10: Materialwulst
- 11: Verschlussring
- 12: Deckel
- 13: Dichtelement
- 14: Zapfen
- 15: Ausgleichselement
- 16: Nut
- 17: Wärmeschutzschild
- 18: Radträger
- 19: Verschraubung
- 20: Flanschbereich
- 21: Aufnahmenut
- 22: Ringbereich
- 23: Dichtung
- 24: Dichtfläche
- 25: Einlage
- 26: Wulstförmiger Abschnitt

## Patentansprüche

1. Kugelgelenk, insbesondere Radführungsgelenk für Kraftfahrzeuge mit einem Gehäuse (1) in dessen wenigstens einseitig offenem Hohlraum (2) eine Lagerschale (3) mit einer darin gelagerten Gelenkkugel (4) eingesetzt ist, wobei die Lagerschale (3) zusammen mit der von ihr aufgenommenen Gelenkkugel (4) eine Baueinheit (3, 4) bildet, die in dem Hohlraum (2) entlang einer Achse (6) verschiebbar ist und in dem Hohlraum (2) des Gehäuses ( 1 ) ein erster Bund (7) und ein zweiter Bund (8) Endanschläge bilden, zwischen denen ein begrenzter Freiweg (5) der verschiebbaren Baueinheit (3, 4) definiert ist,
**dadurch gekennzeichnet, dass** die Lagerschale (3) unter sanfter radialer Vorspannung in dem Hohlraum (2) aufgenommen und zwischen der Lagerschale (3) und der Innenoberfläche des Hohlraumes (2) wenigstens ein radial wirksames Ausgleichselement (15) angeordnet ist.

2. Kugelgelenk nach Anspruch 1,
**dadurch gekennzeichnet, dass** in die Außenoberfläche der Lagerschale (3) mindestens eine Nut (16) eingelassen und in jede Nut ein Ausgleichselement (15) eingesetzt ist, dessen Außenabmessung geringfügig größer als die Innenabmessung des Hohlraumes (2) ist.

3. Kugelgelenk nach einem der vorstehend genannten Ansprüche,
**dadurch gekennzeichnet, dass** an dem beidseitig offenen Gehäuse (1) der erste Bund (7) ein gelenkeinwärts gerichteter Teil des Gehäuserandes und der zweite Bund (8) ein radialer Flanschbereich (20) eines Verschlußelementes (9) ist.

4. Kugelgelenk nach Anspruch 3,
**dadurch gekennzeichnet, dass** das in eine Aufnahme (21) des Gehäuses (1) eingesetzte Verschlusselement (9) nach der Montage des Kugelgelenkes durch einen umgeformten Materialwulst (10) festgesetzt ist.

5. Kugelgelenk nach Anspruch 3 oder 4,
**dadurch gekennzeichnet, dass** das Verschlusselement (9) mehrteilig ist und aus einem Verschlussring (11) und einem dichtend mit diesem verbundenen Deckel (12) besteht.

6. Kugelgelenk nach Anspruch 5,
**dadurch gekennzeichnet, dass** zwischen Verschlussring (11) und Deckel (12) wenigstens ein Dichtelement (13) aufgenommen ist.

7. Kugelgelenk nach einem der vorstehend genannten Ansprüche,
**dadurch gekennzeichnet, dass** die Gelenkkugel (4) lösbar mit einem Zapfen (14) verbunden ist.

8. Kugelgelenk nach Anspruch 7,
**dadurch gekennzeichnet, dass** der Zapfen (14) Bestandteil eines Radträgers eines Kraftfahrzeuges ist.

9. Kugelgelenk nach einem der vorstehend genannten Ansprüche,
**dadurch gekennzeichnet, dass** das Kugelgelenk zur Abschirmung gegen benachbarte Bauteile ein Wärmeschutzschild (17) aufweist.

## Claims

1. Ball joint, in particular a wheel guiding joint for motor vehicles comprising a housing (1) having a cavity (2), which is open at least at one end and in which a bearing shell (3) with a joint ball (4) supported therein is inserted, wherein the bearing shell (3) together with the joint ball (4) received thereby forms a unit (3, 4) that is displaceable in the cavity (2) along an axis (6) and in the cavity (2) of the housing (1) a first collar (7) and a second collar (8) form end stops, which between them define a delimited clearance (5) of the displaceable unit (3, 4),
**characterized in that** the bearing shell (3) is received with gentle radial bias in the cavity (2) and at least one radially effective compensating element (15) is disposed between the bearing shell (3) and the internal surface of the cavity (2).

2. Ball joint according to claim 1,
**characterized in that** at least one groove (16) is let into the external surface of the bearing shell (3) and there is inserted into each groove a compensating element (15), the external dimension of which is slightly larger than the internal dimension of the cavity (2).

3. Ball joint according to one of the previously described claims,
**characterized in that** on the housing (1), which is open at both ends, the first collar (7) is a part of the housing edge that is directed inwards of the joint and the second collar (8) is a radial flange region (20) of a closure element (9).

4. Ball joint according to claim 3,
**characterized in that** the closure element (9) inserted into a receiver (21) of the housing (1) is fixed after assembly of the ball joint by means of a deformed material bead (10).

5. Ball joint according to claim 3 or 4,
**characterized in that** the closure element (9) is multipart and comprises a closure ring (11) and a cover (12) sealingly connected thereto.

6. Ball joint according to claim 5,
**characterized in that** at least one sealing element (13) is received between closure ring (11) and cover (12).

7. Ball joint according to one of the previously described claims,
**characterized in that** the joint ball (4) is connected detachably to a journal (14).

8. Ball joint according to claim 7,
**characterized in that** the journal (14) is a component part of a wheel carrier of a motor vehicle.

9. Ball joint according to one of the previously described claims,
**characterized in that** the ball joint comprises a heat shield (17) for screening from adjacent components.

## Revendications

1. Joint à rotule, notamment joint de guidage de roue pour véhicules automobiles, comportant un boîtier (1), dans la cavité (2), ouverte au moins d'un coté, duquel est inséré un coussinet de palier (3) sur lequel est montée une rotule (4), dans lequel le coussinet de palier (3) forme, conjointement avec la rotule (4), logée dans ce coussinet, une unité de construction (3, 4), qui est déplaçable dans la cavité (2) le long d'un axe (6), et dans la cavité (2) du boîtier (1) un premier collet (7) et un second collet (8) forment des butées d'extrémité, entre lesquelles est défini un trajet libre limité (5) de l'unité de construction déplaçable (3, 4), **caractérisé en ce que** le coussinet de palier (3) est logé moyennant une faible précontrainte radiale, dans la cavité (2) et qu'au moins un élément de compensation (15) agissant radialement est disposé entre le coussinet de palier (3) et la surface intérieure de la cavité (2).

2. Joint à rotule selon la revendication 1, **caractérisé en ce qu'**au moins une gorge (16) est aménagée dans la surface extérieure du coussinet de palier (3) et que dans chaque gorge est insérée un élément de compensation (15), dont la dimension extérieure est légèrement supérieure à la dimension intérieure de la cavité (2).

3. Joint à rotule selon l'une des revendications indiquées précédemment, **caractérisé en ce que** sur le boîtier (1) ouvert des deux côtés, le premier collet (7) est une partie du bord du boîtier, dirigée vers l'intérieur du joint, et le second collet (8) est une partie de bride radiale (20) d'un élément de fermeture (9).

4. Joint à rotule selon la revendication 3, **caractérisé en ce que** l'élément de fermeture (9) inséré dans un logement (21) du boîtier (1) est fixé après le montage de la rotule par un bourrelet de matière rabattu (10) .

5. Joint à rotule selon la revendication 3 ou 4, **caractérisé en ce que** l'élément de fermeture (9) est formé de plusieurs parties et est constitué par une bague de fermeture (11) et un couvercle (12) relié de façon étanche à cette bague.

6. Joint à rotule selon la revendication 5, **caractérisé en ce qu'**au moins un élément d'étanchéité (13) est logé entre la bague de fermeture (11) et le couvercle (12).

7. Joint à rotule selon l'une des revendications indiquées précédemment, **caractérisé en ce que** la rotule (4) est reliée de façon amovible à un embout (14).

8. Joint à rotule selon la revendication 7, **caractérisé en ce que** l'embout (14) fait partie d'un support de roue d'un véhicule automobile.

9. Joint à rotule selon l'une des revendications indiquées précédemment, **caractérisé en ce que** la rotule possède, pour sa protection vis-à-vis de composants voisins, un bouclier de protection thermique (17).
